Europäisches Patentamt

**European Patent Office**

Office européen des brevets

(19)

(11) Publication number: **0 055 025**
A1

(12)

# EUROPEAN PATENT APPLICATION

(21) Application number: **81305440.0**

(22) Date of filing: **18.11.81**

(51) Int. Cl.³: **G 01 B 11/00, G 01 B 11/24**

(30) Priority: **19.11.80 GB 8037085**

(71) Applicant: Cosciani, Roberto Carlo, 345 Saffron Lane, Leicester (GB)

(43) Date of publication of application: **30.06.82**
**Bulletin 82/26**

(72) Inventor: Cosciani, Roberto Carlo, 345 Saffron Lane, Leicester (GB)

(84) Designated Contracting States: **BE DE FR NL**

(74) Representative: Hallam, Arnold Vincent et al, E.N. LEWIS & TAYLOR 144 New Walk, Leicester LE1 7JA (GB)

(54) **Improvements in or relating to apparatus for measuring a dimension of an article.**

(57) The present invention provides an apparatus for providing an accurate measurement of the horizontal and vertical distances between two points on an article. The apparatus comprises a worktable (14) mounted on a frame (12) for rectilinear movement in a first (X) horizontal direction transversely of the frame (12). A travelling microscope (16) is mounted on an upstanding support (32) of the frame (12) and is movable relative to the support (32) in a second (Y) horizontal direction substantially at right angles to the first direction and in a third (Z) vertical direction. The microscope (16) overlies the worktable (14) for viewing an article on the worktable. Respective positional transducers are associated with the worktable (14) and the microscope (16) to provide electrical signals dependent on the positions of the worktable and microscope relative to the frame. The electrical signals are processed by respective digital displays which display in metric or imperial units the distances that the worktable and the microscope have moved from a preset datum.

Title:  Improvements in or relating to apparatus for measuring
       a dimension  of an article

       The present invention relates to apparatus for measuring
a dimension of an article.

       Optical projectors and toolmakers  microscopes have, for
many years, been used for measuring small dimensions of
articles, for example for checking the profile and surface
finish of an article.  However, reasonable accuracy has only
been possible where the dimensions being measured were extremely
small and the article surface on which the measurement was being
effected was generally flat and reflective.  It has hitherto
proved extremely difficult to obtain accurate measurements of
large distances on irregular or low reflective surfaces such as
are found in plastics and rubber articles and moulds and dyes.
It is quite often necessary, for example, to make accurate
measurements of internal and external intersections of tapers,
to determine  hole centres on angular dimensions and to measure
distances within a mould all of which prove extremely difficult
to accomplish using conventional measuring techniques.

       The present invention seeks to provide an improved form
of apparatus for measuring a dimension of an article.

       The present invention provides an apparatus for measuring
a dimension of an article, the apparatus comprising a frame; a
worktable mounted on said frame for supporting said article;
optical means mounted on said frame for viewing said article, said optical means having alignment means for alignment with a preselectable location on said article; displacement means for enabling relative displacement of said article and said optical means in first and second substantially horizontal directions substantially at right angles to one another; positional sensing means for monitoring the relative movement of said article in each of said directions; and means for indicating said movement as a measured distance from a preselected datum.

In a preferred embodiment of the present invention the worktable is movable transversely of the frame in said first direction and the optical means which conveniently is in the form of a microscope is mounted on an upstanding support which is a part of the frame, the microscope being movable in said second direction relative to the upstanding support. The microscope is mounted such that it overlies the worktable. Both the worktable and the microscope are preferably mounted on respective carriages which are slidable relative to the respective portions of the frame by way of suitable linear bearings. Movement of the carriages is effected by suitable gearing such as rack and pinion mechanisms, the racks preferably being secured to the frame while the pinions are secured on respective drive axles mounted in the associated carriages for rotation by an operator of the apparatus thus to move the worktable and the microscope in their respective directions.

Preferably the gearing for each carriage has both a coarse and a fine movement control, the coarse movement being effected by a simple 1:1 gear ratio while the fine movement is effected
through a reduction gear of preferably 3:1 ratio.

The positional sensing means preferably comprises a
respective positional transducer, for example a mechanical-
electrical transducer in the form of a potentiometer or an
induction sensor, which is coupled to the associated carriage
and which provides an electrical signal dependent on the
position of the carriage. The indicating means advantageously
comprises a respective electronic digital display associated
with each positional transducer for converting the electrical
signal into a digital display. Each digital display may be
calibrated in metric or imperial units and conveniently can be
set to zero at any preselected position of the associated
carriage. The direction of movement of a carriage relative to
a preselected datum is conveniently indicated on the digital
display by means of a "+" or "-" adjacent the measured distance
displayed.

Hitherto, it has also proved extremely difficult to
measure accurately the vertical separation between two surfaces
an article. Such measurements have generally been effected using
one of two methods. In one method a "clock" is used, the clock
being secured so as to be immovable vertically with a depending
measuring rod of the clock abutting one of the two article
surfaces. The clock is zeroed and its lateral position adjusted
so that the measuring rod abuts the second of the two surfaces.
The reading on the clock is then the vertical separation between the two surfaces. This method is generally of low accuracy and cannot be used for measuring extremely small distances and where the article concerned is made of a resilient material such as rubber since the deformation of the article's surfaces under the pressure of the measurement rod makes accurate measurement impossible.

In a second method a microscope or similar optical device is used to focus firstly on one surface and then on the other surface, the distance therebetween being measured using a vernier scale or similar. This method relies on the microscope/accurately being focused which in turn depends on the vision of the operator. Measurements of the same distance can vary substantially from operator to operator and at best are of limited accuracy.

The present invention provides an apparatus for measuring the vertical separation between two locations on an article, the apparatus comprising a worktable for supporting said article; optical means for viewing said article, said optical means having alignment means for alignment with said locations on said article; means focusing a target image at a preset point in the focal plane of the said optical means and aligned with said alignment means; displacement means for enabling relative displacement of said worktable and said optical means in a substantially vertical direction; positional sensing means for monitoring the relative movement between said worktable and said optical means in said direction; and means for indicating said movement as a measured distance from a preselectable datum.

The present invention also provides an apparatus for measuring the vertical separation between two locations on an article, the apparatus comprising an optical means for viewing said article, said optical means having alignment means for alignment with said locations and being displaceable relative to said article in a substantially vertical direction; means for projecting a target image into the viewing area of said optical means, said projecting means being secured relative to said optical means and being preset such that said target image is focused in a preselected plane perpendicular to the focal axis of said optical means and said focused target image is aligned with said alignment means; and means for monitoring the relative movement between said optical means and said article in said direction and indicating said movement as a measured distance from a preselectable datum.

The present invention further provides a method of measuring the vertical separation between two locations on an article, comprising projecting and focusing a target image into a preselected plane perpendicular to the focal axis of and in the viewing area of an optical viewing means, and aligning the focused target image with an alignment means of said optical means; bringing a first of said locations into alignment with said alignment means; adjusting the separation between said optical means and said first location until said target image is aligned with said alignment means; bringing the second of said locations into alignment with said alignment means; further adjusting the separation between said optical means and said second location until said target image is again aligned with said alignment means while monitoring said further adjustment to provide an indication of the vertical separation between said two locations.

In a preferred embodiment of the present invention the apparatus also includes provision for relative movement between the worktable and the optical means in two directions substantially at right angles to one another in a substantially horizontal plane.

- 7 -

The present invention is further described hereinafter, by way of example, with reference to the accompanying drawings, in which:

Figure 1 is a partial front elevation, partly in section, of a preferred embodiment of an apparatus according to the present invention;

Figure 2 is a side elevation, partly in section, of the apparatus of Figure 1 with the diascopic table omitted;

Figure 3 is a part sectional view of the worktable and gear assembly taken on the line III-III of Figure 1;

Figure 4 is a part sectional view of a modified form of gear for the worktable;

Figure 5 is a part sectional view of a further form of gear for the apparatus of Figure 1; and

Figure 6 is a front elevation of a further embodiment of apparatus according to the present invention.

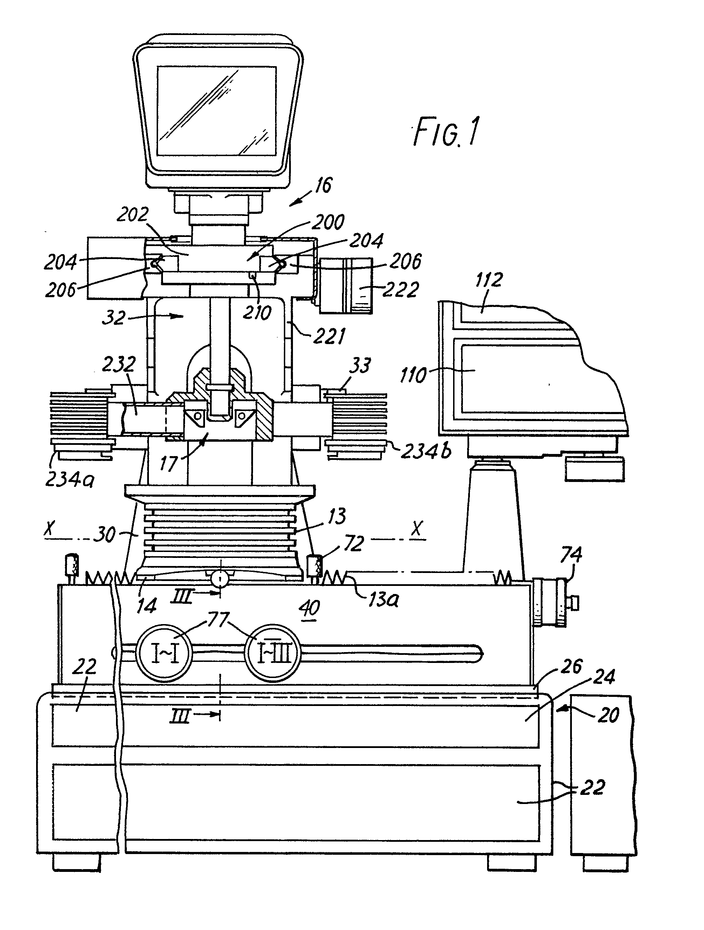

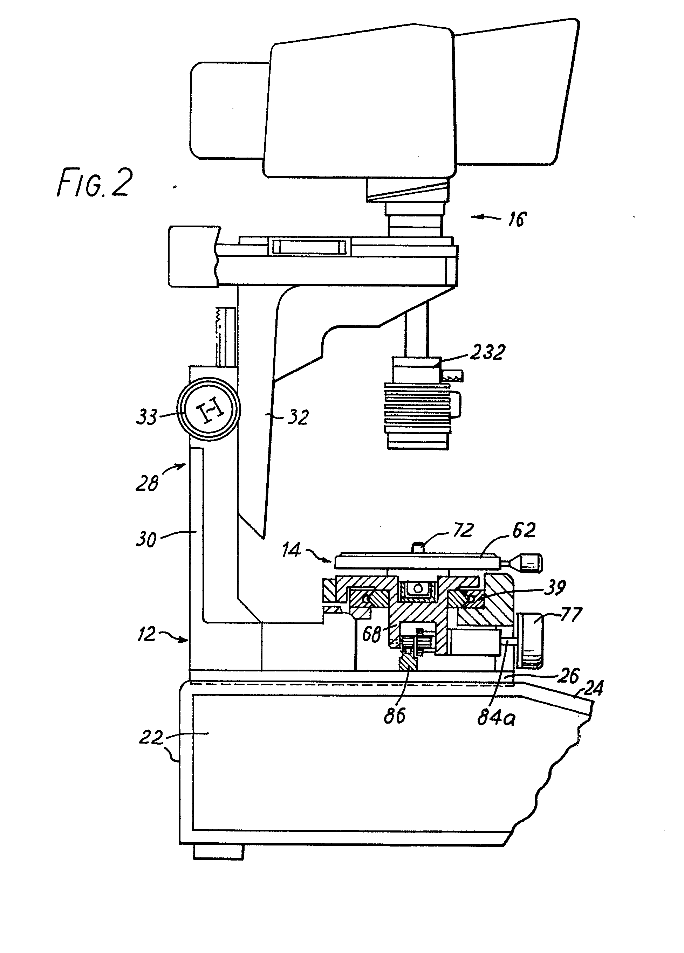

Figures 1 to 5 show an apparatus for accurately measuring distances between two points on a workpiece in both an X and Y axis direction of a substantially horizontal plane. The apparatus comprises a frame 12 on which is mounted a worktable 14 movable transversely across the frame 12 in a direction corresponding to the X axis of measurement along a line XX, and an optical viewing system, here in the form of a travelling steroscopic microscope 16 having a graticule and, an objective lens and reflective mirror mounting 17, the microscope 16 being movable in a substantially horizontal plane in a direction corresponding to the Y axis at right angles to the X axis. The frame 12 comprises a housing 20 having front, rear and end walls 22, a sloping control panel 24 and a relatively thick top panel which constitutes a bed plate 26 of the apparatus.

A slide assembly 28 includes an upstanding pillar 30 slidably coupled to a stand 32 on which the microscope 16 is mounted. The stand 32 is vertically adjustable relative to the pillar 30 by a suitable rack and pinion gearing system to enable focusing of the microscope on a workpiece located on the worktable. Focusing is effected by an operator control knob 33.

The worktable 14 conveniently mounts a diascopic table assembly 13 (shown in Figure 1) and is carried on a gear assembly 15. The construction of the worktable 14 and its movement in the X direction is described below. The worktable is generally shown with the diascopic table assembly omitted for clarity.

The end walls 22 of the apparatus are bolted to and upstand from the bed plate 26 and are rigidly interconnected by two bearing support bars 36. A bottom bearing support bar 38 is bolted to each support bar 36 and a respective linear half-bearing 39 is rigidly secured to each of the bars 36 and 38. The area extending between the end walls 22 is largely enclosed by concertina dust covers 13 to exclude dirt and dust.

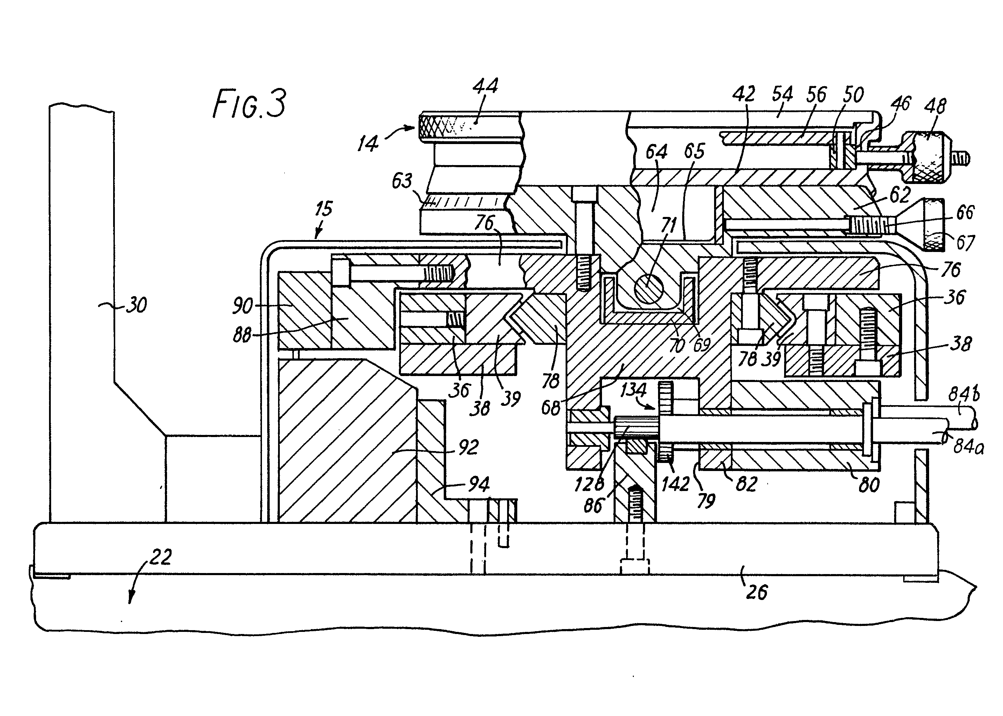

The worktable 4 which is shown in partial section in Figure 3 comprises a circular head 42 having a flanged edge 44 with a slot 46. A knurled knot 48 extends through the slot 46 and is fixed to a ring 50 which is a snug fit within the flanged edge 44 and is rotatable with respect thereto by means of the knob 48.

The flanged edge 44 has a lip 52 upon which, in use, rests a thick metal plate 54.

Three centring arms 56 are pivotally attached to the ring 50 within the head 42 by means of pivots positioned equidistantly around the circumference of the ring 50. An underportion of a free end 58 of each arm 56 rests on the top surface of the head 42 and an upper surface of each arm is provided with a bush. Each bush is slidably engaged in one of three uniformly spaced slots provided in the plate 54 and curving outwardly from the plate centre. Each bush mounts a removable centring finger. Rotation of the knob 48 rotates the ring 50 thus causing the free ends of the arms 56 and thus the fingers to move along the slots. This enables substantially circular workpieces of varying diameters to be gripped on the table by the fingers.

A base portion 62 of the head 42 is provided with degree markings 63 on an external surface thereof and the head 42 is releasably held in engagement with the base portion 62 by means of a spigot 64 locatable in an aperture 65 upon which bears a screw-threaded rod 66 provided on the portion 62. The spigot 64 alows the head 43 to be rotatably positioned relative to the portion 62 and secured in that position by means of the rod 66. Alternatively the rod 66 may carry a toothed gear which meshes with teeth on the spigot 64 to allow rotation of the latter by turning a knurled knob 67 on the rod 66. Degree markings may alternatively or additionally be provided on the head periphery.

The base portion 62 is bolted to a carriage body 68, and a cavity 69 of U-shaped cross section is formed therebetween. A longitudinal member, 70, U-shaped in cross section, extends through the cavity 59 and is attached at each end to the end walls 22.

A rod 71 of circular cross section extends through an aperture provided in a part of the base portion bordering the cavity 69, and is lockable therein by means of a screw 72 threadedly engaged in portion 62. An end face of the rod 71 is aligned with and may, in use, abut an end face of a vernier screw gauge 74 mounted on one end wall 22.

Limbs 76 extend from the carriage body 68 and a linear half-bearing 78 is bolted to each limb, each half-bearing being co-operable with the associated half-bearing 39. The two bearings provided by the two parts of half-bearings 39, 78 support the carriage for movement transversely of the apparatus along the line X-X within the frame.

An axially extending U-shaped rebate 79 is provided on an underside of the carriage body 68 and a block 80 is bolted to a limb 82 forming one side wall of the rebate 79.

The gear assembly 14c includes a pair of axles 84a, 84b which extend through the block 80 and are supported thereby with the inner ends of the axles extending into the rebate 79 and the opposite ends of the axles 84a, 84b being provided with respective operating knobs 77.

The inner ends of the axles 84a, 84b carry pinions 128 (only one of which is shown in the drawings) one of which cooperates with a rack 86 bolted to the bed plate 26 to provide a 1:1 gear ratio whereas the other pinion is geared to the rack 86 via a reducing gear 134 which provides a 3:1 gearing ratio. The reducing gear 134 conveniently comprises a pinion which engages the rack 86 and is rigidly mounted on a spindle together with a larger diameter gear 142 which engages the spindle on axle 84b.

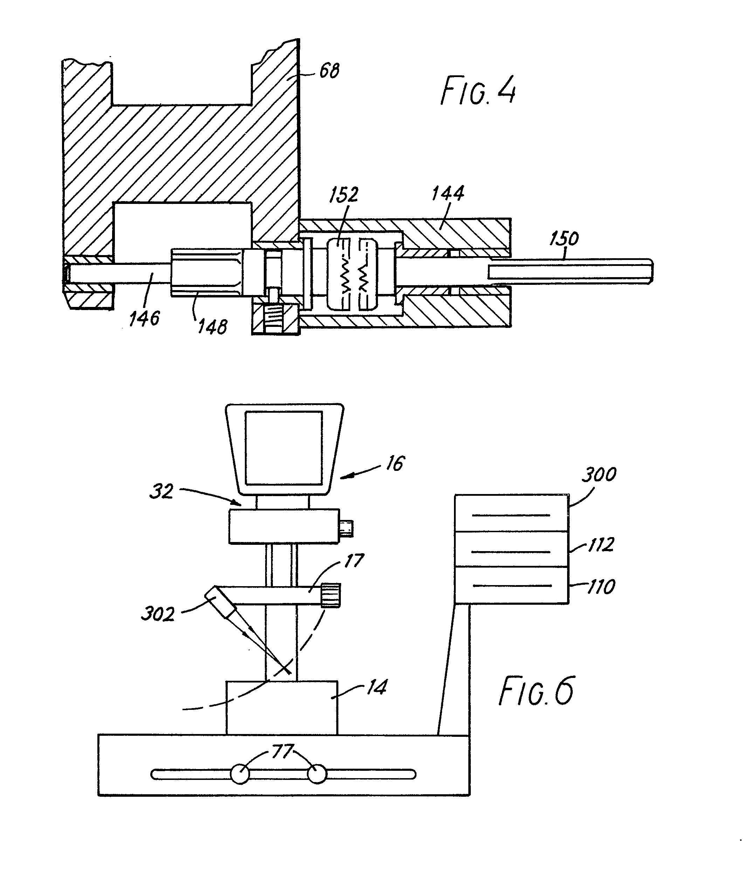

A modified form of gearing for the gear assembly is shown partly in section in Figure 4. This comprises a housing 144 secured to the carriage body 58 and rotatably mounting a spindle 146 which carries a pinion 148. The spindle 146 is geared to a further spindle 150 by suitable gearing 152, the spindle 150 carrying a knob 77 (not shown in Figure 4).

A connector 90 is bolted to a limb 76a of the carriage body 68 by way of a spacer 88 and is operably linked to a positional transducer which monitors the position of the work table 14 along the X-X axis and provides an electrical signal in dependence on the position. The transducer is, for example, in the form of a potentiometer 92 bolted to the bed plate 26 by means of an aligning bracket 94. The positional transducer is electrically coupled to a digital display 110 of known type which can be reset at zero at any position of the worktable 14 on the X-X line to set a datum. The magnitude of travel of the worktable 14 from the datum is then displayed by the display 110 in preselected units, for example in metric or imperial units.

The control panel 24 mounts a switch for the mains electricity supply to the apparatus and switches to control lamps secured relative to the microscope 16 for illuminating the worktable and workpiece. Dimmer switches are provided for controlling the light intensity from the lamps.

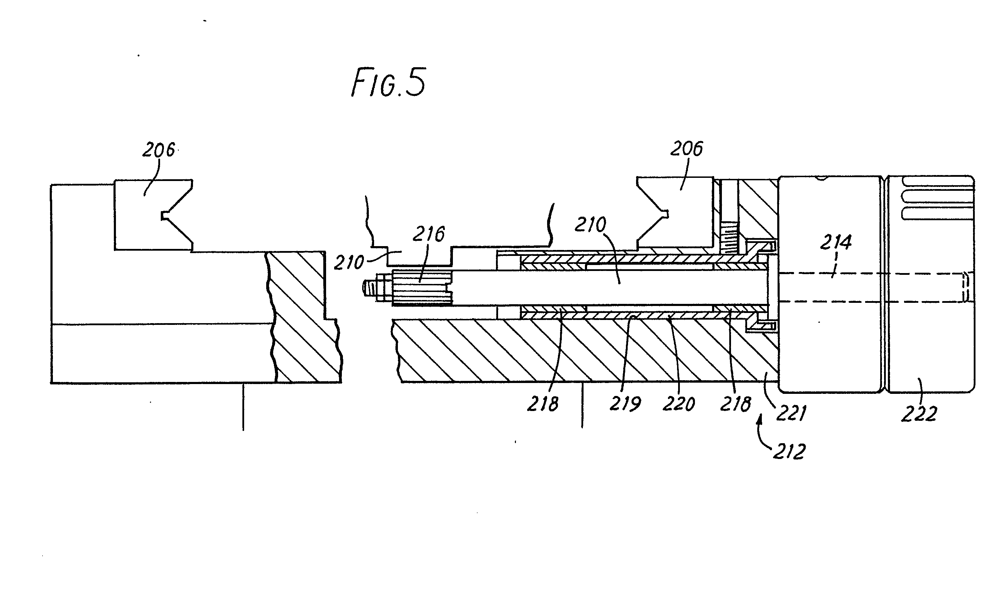

The microscope 16 is rigidly supported on a carriage 200 which is in turn slidably mounted on the stand 32 so as to be movable in the Y direction. The carriage body 202 may conveniently be constructed in a similar manner to the carriage body 68 with lateral linear half-bearings 204 engaging in corresponding half-bearings 206 secured to the stand 32. The gear assembly for the microscope carriage 200 is conveniently constructed in a similar manner to the gear assembly    for driving the worktable 14. However, an alternative, simpler, form of gear assembly is shown in Figure 5 and is described below.

Figure 5 is a front elevation, partly in section through one form of gear assembly for the microscope carriage 200. The microscope carriage body 202 carries on its underside a rack 210 which cooperates with the gear assembly 212 mounted on the stand 32. The gear assembly comprises a spindle 214 on one end of which is rigidly mounted a pinion 216 which meshes with the rack 210. The spindle is rotatably mounted in bushes 218 which are in turn secured in a housing 220 secured in a through-bore 219 formed in one side arm 221 of the stand 32. The side arm 221 is the right side arm as seen in Figure 1 for use by a right-handed operator although the gear assembly may also be mounted in the left side arm if desired. The free end of the spindle 214 mounts a knob 222 to enable rotation of the pinion 216 by an operator, thus effecting movement of the carriage body 202 and the microscope 16 in the Y direction. The pinion 216 is conveniently geared to the rack 210 to provide a gear ratio of 3:1.

The carriage body 202 has a positional transducer 203 associated therewith in a similar manner to the carriage body of the worktable 14, the positional transducer being electrically coupled to a second digital display 112, similar to the digital display 110, to enable displacement of the microscope in the Y direction from a preselected datum to be displayed.

The objective lens and reflective mirror mounting 17 of the microscope 16 also carries a cross member 232 on which housings 234a and 234b for the lamps are mounted.

In use, to determine the distance between two locations in the X or Y direction on a workpiece the workpiece is placed on the worktable and the first location on the workpiece is aligned with a selected point on the microscope graticule. Both digital electronic displays are then zeroed to set a datum and the relative positions of the selected graticule point and the second location on the workpiece are adjusted by the operator using the control knobs 77 and 222 to move the worktable along the line X-X and the microscope in the Y direction. Once the selected point on the graticule is aligned with the second location on the workpiece the movement in the X and Y directions is read from the two digital displays. The straight line distance between the two locations can then be calculated mathematically since the two figures read from the digital displays form the dimensions of two sides of a right-angled triangle with the straight line distance forming the third side. Alternatively the distance can be calculated electronically for instantaneous display.

As an alternative to the above method prior to the measurement being effected the worktable can be rotated to align the two points in either the X or Y direction using the graticule as a reference so that only one movement is required with the distance being read directly off the relevant display.

A circular workpiece can be secured by moving the centring fingers 60a as far from the centre of the head as possible. This is achieved by rotating the knot 48 to the limit of its travel in one direction. The circular workpiece is placed approximately in the centre of the area bounded by the fingers and the fingers are then moved towards the centre of the head so automatically centring the workpiece.

Should the electricity supply fail and power not be available for the digital displays the vernier 74 can be used by the utilisation of slip blocks between the vernier and the rod 71 in known manner. The U-shaped member 70 acts as a tray to prevent slip blocks falling into awkward positions within the apparatus.

A print-out of the read-out given on the digital electronic display may conveniently be provided in the apparatus.

The apparatus according to the present invention provides a simple and accurate way of measuring dimensions of an article with large measurable ranges on both the X and Y axes. For example, in the illustrated embodiment the X axis measurable range is conveniently 12 inches (300 mm), while measurement
on the Y axis is conveniently 6 inches (150 mm). Measurement
can be effected to a resolution of 0.0001 inch (0.002 mm).
The digital displays conveniently identify the direction of
movement from a set datum by displaying a "+" or "-" sign
accordingly.

Figure 6 of the drawings illustrates a further embodiment
of an apparatus according to the present invention. The apparatus
may be in compact form for measuring only the vertical distance
between two locations on a workpiece or may include the facility
for accurate measurement in both the X and Y directions such as
described above with reference to Figures 1 to 5. For convenience
the vertical measurement is considered as measurement in the Z
direction.

The apparatus is constructed in a similar manner to the
apparatus previously described with reference to Figures 1 to 5
but also includes a positional transducer coupled to the stand
32 to monitor vertical movement of the microscope 16. The
positional transducer is electrically connected to a third
digital display 300 which, as in the manner of the digital displays
110 and 112, can be set to zero at any vertical positon of the
stand 32.

The objective lens and reflective mirror mounting 17 of
the microscope 16 also carries a lens system 302 which includes
a light source and focuses a target image at a preselected point
in the focal plane of the microscope 16 with a preselected point on the target image aligned with a preselected point on the microscope graticule. The target image is, for example, a hair-line image in the form of an arrowhead with the tip of the arrowhead being located in alignment with the preselected point on the microscope graticule. The focusing and alignment of the lens system 302 is effected during manufacture by locating an object with an upper horizontal surface on the worktable 14 and first focusing the microscope 16 on the horizontal surface. The latter may conveniently carry suitable markings to assist focusing. While the surface is viewed through the microscope the lens system 302, which is pivoted about a horizontal axis extending in the Y direction, is pivoted so that the target image is projected onto the object surface with the preselected point on the target image aligned with the preselected graticule point. The focusing of the lens system 302 is then adjusted to bring the target image into sharp focus and any further minor adjustments to the lens system pivot position and focusing are completed. Both the focusing and the pivot of the lens system are then locked to prevent further adjustment. Thus it will be appreciated that when an article is located on the worktable 14 in the viewing area of the microscope 16 the target image projected onto the workpiece by the lens system 302 will only be in focus with the preselected point of the target image aligned with the preselected graticule point when that location on the workpiece which is aligned with the aforementioned preselected graticule point lies in the focal plane of the microscope 16.

The measurement of the vertical separation between two locations on a workpiece is described below.

The workpiece is first located on the worktable 14 in the viewing area of the microscope 16 and the first selected location on the workpiece aligned with the preselected graticule point. Where the apparatus has facilities for movement in both the X and Y directions this alignment is easily effected by moving the worktable 14 and the microscope 16 accordingly. Once the first location is aligned with the preselected graticule point the target image will be seen lying either to one side or the other of the preselected graticule point if the workpiece location lies above or below the focal plane of the microscope 16. The position of the microscope is thus adjusted to bring the workpiece location into focus and as this is effected the target image is seen to come into focus while at the same time the preset point on the target image moves into alignment with the preselected graticule point. Once the graticule and target image points are aligned no further adjustment is necessary and the asssociated digital display 300 is set to zero. The positions of the worktable 14 and the microscope 16 are then adjusted in the X and Y directions to bring the second selected location on the workpiece into alignment with the preselected graticule point. Since the vertical position of the microscope 16 is not affected during this X and Y adjustment it will be seen that once the second workpiece location and the preselected graticule point are aligned the target image will appear to have moved laterally relative to the preselected graticule point and have gone out of focus. This is purely as a result of the fact that the second workpiece location is not at the same vertical position as the first workpiece location and the lateral displacement and

- 19 -

defocusing of the target image will depend entirely on the magnitude of the vertical separation between these two workpiece locations.

The vertical position of the microscope 16 is then readjusted to bring the preset image point once more into alignment with the preselected graticule point, this automatically resulting in the target image focusing to a sharp image. The vertical adjustment effected to the microscope 16 is displayed on the digital display 300 and is thus a measurement of the vertical separation between the two chosen locations on the workpiece.

The present invention provides a simple, effective and accurate way of measuring the vertical separation between two locations on a workpiece. Since the accuracy of the measurement does not depend on the accuracy of focusing of the microscope 16 by an operator a major cause of measurement error is avoided. Measurement can be effected to an accuracy of 0.0001 inch.

E.N. Lewis & Taylor,

144 New Walk,

Leicester,

LE1 7JA.

CLAIMS:

1. A method of measuring the vertical spearation between two
   locations on an article, comprising projecting and focusing
   a target image into a preselected plane perpendicular
   to the focal axis of and in the viewing area of an optical
   viweing means, and aligning the focused target image with
   an alignment means of said optical means; bringing a first
   of said locations into alignment with said alignment means;
   adjusting the separation between said optical means and said
   first location until said target image is aligned with said
   alignment means;**bringing** the second of said locations into
   alignment with said alignment means; further adjusting the
   separation between said optical means and said second location
   until said target image is again aligned with said alignment
   means while monitoring said further adjustment to provide
   an indication of the vertical separation between said two
   locations.

0055025

2. An apparatus for measuring the vertical separation between two locations on an article, the apparatus comprising an optical means for viewing said article, said optical means having alignment means for alignment with said locations and being displaceable relative to said article in a substantially vertical direction; means for projecting a target image into the viewing area of said optical means, said projecting means being secured relative to said optical means and being preset such that said target image is focused in a preselected plane perpendicular to the focal axis of said optical means and said focused target image is aligned with said alignment means; and means for monitoring the relative movement between said optical means and said article in said direction and indicating said movement as a measured distance from a preselectable datum.

3. An apparatus for measuring the vertical separation between two locations on an article, the apparatus comprising a worktable for supporting said article; optical means for viewing said article, said optical means having alignment means for alignment with said locations on said article; means focusing a target image at a preset point in the focal plane of the said optical means and aligned with said alignment means; displacement means for enabling relative displacement of said worktable and said optical means in a substantially vertical direction; positional sensing means for monitoring the relative movement between said worktable and said optical means in said direction; and means for indicating said movement as a measured distance from a preselectable datum.

4.      Apparatus as claimed in claim 3 wherein said focussing means comprises a lens system having a light source, and said target image is in the form of a hair-line image of the like.

5.      Apparatus as claimed in claim 3 or 4 further comprising a frame, said worktable and optical means being mounted on said frame for supporting said article; displacement means for enabling relative displacement of said article and said optical means in first and second substantially horizontal directions substantially at right angles to one another; positional sensing means for monitoring the relative movement of said article in each of said directions; and means for indicating said movement as a measured distance from a preselected datum.

6.      Apparatus as claimed in claim 5 wherein said worktable is mounted on said frame for movement in said first direction relative to said frame and said displacement means comprises a gear assmebly coupling said worktable to said frame.

7.      Apparatus as claimed in claim 6 wherein said gear assembly comprises a carriage on which the worktable is secured and which is slidingly coupled to the frame by way of linear bearings, and a rack and pinion mechanism for moving said carriage in said first direction.

8. Apparatus as claimed in any of claims 5 to 7 wherein said positional sensing means includes a first positional transducer coupled to said worktable for providing an electrical signal dependent on the position of said worktable relative to said frame.

9. Apparatus as claimed in claim 8 wherein said indicating means includes an electronic digital display coupled to said first positional transducer for displaying movement of said worktable in said first direction as a measurement of distance from said preselected datum.

10. Apparatus as claimed in any of claims 5 to 9 wherein said optical means is mounted above said worktable on an upstanding support of said frame for movement in said second direction relative to said frame and said displacement means includes a gear assembly coupling said optical means to said upstanding support.

11. Apparatus as claimed in claim 10 wherein said gear assembly comprises a carriage to which said optical means is secured and which is slidingly coupled to said upstanding support by way of linear bearings, and a rack and pinion mechanism for moving said carriage in said second direction.

12. Apparatus as claimed in claim 11 wherein said rack and pinion comprises a rack secured to one of said carriage and
said upstanding support and extending in said second direction
and a drive axle rotatably mounted on the other of said
carriage and said upstanding support for rotation by an
operator and engaged with the rack by way of a pinion.

13. Apparatus as claimed in claim 12 wherein two said drive
axles are provided, one of which is coupled to the rack by a
one-to-one gear ratio for coarse movement of said optical
means and the other of which is coupled to the rack by way of
a reduction gear for fine movement of said optical means.

14. Apparatus as claimed in claims 12 or 13 wherein said
rack is secured to said upstanding support and said drive axle
is rotatably mounted on said carriage.

15. Apparatus as claimed in any of claims 10 to 14 wherein
said positional sensing means includes a second positional
transducer coupled to said optical means for providing an
electrical signal dependent on the horizontal position of
said optical means relative to said upstanding support.

16. Apparatus as claimed in claim 15 wherein said indicating
means includes an electrical digital display coupled to said
second positional transducer for displaying movement of said
optical means in said second direction as a measurement of distance from said preselected datum.

17. Apparatus as claimed in any of claims 2 to 16 wherein said optical means is mounted above said worktable on an upstanding support of said frame for vertical movement relative to said frame and said displacement means includes a gear assembly coupling said optical means to said upstanding support.

18. Apparatus as claimed in claim 17 wherein said positional sensing means includes a third positional transducer coupled to said optical means for providing an electrical signal dependent on the vertical position of said optical means relative to said upstanding support.

19. Apparatus as claimed in claim 18 wherein said indicating means includes an electrical digital display coupled to said third positional transducer for displaying movement of said optical means in said vertical direction as a measurement of distance from said preselected datum.

20. Apparatus as claimed in any of claims 2 to 19 wherein said optical means is a microscope.

21. Apparatus as claimed in any of claims 2 to 20 wherein said alignment means comprises a graticule.

FIG.1

FIG.2

FIG.3

0055025

*FIG.4*

68

152   144

150

146   148

*FIG.6*

16

32

300

112

110

17

302

14

77

FIG.5

206

206

210

216

210

214

218  219  220  218  221  222

212

European Patent
Office

**EUROPEAN SEARCH REPORT**

Application number

EP 81 30 5440

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X,Y | FR - A - 2 349 126 (M. KAYE)  * introduction; page 5, line 12 - page 7, line 3; page 7, line 24 - page 8, line 31; figures 1,2, 3A,3B,3C,4A,4B,4C * | 1-4,20 21 | G 01 B 11/00 G 01 B 11/24 |
| X,Y | IBM TECHNICAL DISCLOSURE BULLETIN, vol. 22, no. 7, December 1979 NEW YORK (US) H.M. NIER: "Automatic moving part measuring equipment" pages 2856-2857  * pages 2856-2857 * | 2,3,5, 6,8,9, 20 | TECHNICAL FIELDS SEARCHED (Int.Cl. 3)  G 01 B    9/00         11/00          5/00         21/00 |
| Y | FR - A - 2 296 162 (DIGITAL SYS- TEMS INC.)  * page 4, line 1 - page 5, line 25; figure 1 * | 3,5-12 20,21 | |
| X | US - A - 4 232 335 (H. NAKAGAWA et al.)  * figures 1,2B,2C,3A,6; column 4, line 16 - column 7, line 46 * | 1-5 | |
| | US - A - 2 034 096 (F. HAUSER)  * page 1, line 14 - page 2, line 15; figure 1 * | 2-4 | |

The present search report has been drawn up for all claims

| Place of search | Date of completion of the search | Examiner |
|---|---|---|
| The Hague | 19-03-1982 | VISSER |

EPO Form 1503.1   06.78